# EUROPEAN PATENT APPLICATION

(11) **EP 1 919 165 A1**
(43) Date of publication of application: **07.05.2008**
(21) Application number: 07116026.1
(22) Date of filing: 10.09.2007
(51) Int. Cl.: H04L 29/08

(54) **Mobile communication terminal and download resumption control method**

(30) Priority: 11.09.2006 JP 2006245924
(71) Applicant: NTT DoCoMo, Inc., Chiyoda-ku Tokyo 100-6150 (JP)
(72) Inventor: Torimoto, Naomi NTT DoCoMo, Inc., IPD,, Chiyoda-ku, Tokyo Tokyo 100-6150 (JP)
(74) Representative: Grosse, Wolfgang

(57) **Abstract**

If the mobile communication terminal issues a request to resume the download, to the server, in the event of recovery from inability to continuously download during a download (S4), the server transmits an ADF that includes the latest update information for the data at a point in time to the mobile communication terminal in response to the resumption request on the basis of a predetermined procedure (S5). The mobile communication terminal judges whether the target data have been updated by comparing the latest update information in the received ADF and the latest update information of the received data (S6). In cases where the target data have not been updated, the mobile communication terminal issues a request to download only incomplete parts of target data, to the server (S7) and, in cases where the target data have been updated, the mobile communication terminal issues a request to perform a download from the start of the target data at a point in time, to the server (S9).

## Description

### BACKGROH OF THE INVENTION

### Field of the Invention

The present invention relates to a mobile communications terminal that is capable of downloading data from a server, and relates to a download resumption control method that controls the resumption of a download from the server to the mobile communication terminal upon recovery after an error has occurred in the download.

In the present application, "data" encompasses a wide range of meaning, including content data such as music, ring tones, and images, as well as data that is processed by applications, the application programs themselves, and control data.

### Related Background Art

The technology to download content data such as music, ring tones, and images from a server to a mobile communication terminal has been known for some time. When such content data are downloaded, the download requires a few dozen seconds or a few minutes of time, depending on the volume of data. However, a characteristic of communication using a mobile communication terminal is that it is easy for the communication state to vary, due to changes in the communication environment or movement of the user of the mobile communication terminal, and so forth.

Hence, sometimes a continuous download will be impossible during a data download due to factors such as the user of the mobile communication terminal moving out of range, and then downloading will sometimes become possible once again due to factors such as the user of the mobile communication terminal moving back within range. These circumstantial changes can occur frequently.

However, concerning processing to resume the download upon recovery after an error has occurred in the download, the technology to download the latest version of the data automatically and in a reasonable manner in response to the latest update information on the data at the moment of resumption is strongly hoped, though such technology has not yet been developed. Although the technology for the server to retrieve the version information of the data possessed by each mobile device and only download the data that is different between the latest data and the data possessed by the mobile device is disclosed in Japanese Application Laid Open Gazette No. H10-143407, the disclosed technology is processing that is performed before the download begins, and does not cover processing to resume the download when recovering after an error has occurred in the download.

### SUMMARY OF THE INVENTION

The present invention was conceived in order to solve the above problems, and an object of the present invention is to provide a mobile communication terminal and a download resumption control method which are capable of downloading the latest version of the download target data automatically and in a reasonable manner irrespective of whether the data have been updated.

In order to achieve the above object, the mobile communication terminal of the present invention comprises: a download request section that issues a request to download data, to a server; a download reception section that receives data that have been downloaded from the server in accordance with the request from the download request section and holds latest update information relating to the data already received; a recovery detection section that detects recovery from inability to continuously download during reception by the download reception section; a resumption request section that issues a request to resume the download, to the server, in cases where recovery from inability to continuously download is detected by the recovery detection section; an attribute information reception section that receives attribute information including the latest update information relating to the data at a point in time, that has been transmitted from the server on the basis of a predetermined procedure in response to the request from the resumption request section; and an update judgment section that judges whether the data being downloaded has been updated by comparing the latest update information included in the attribute information received by the attribute information reception section and the latest update information relating to data being downloaded that has already been received, wherein the download request section issues a request to download only incomplete parts of the data being downloaded, to the server, in cases where judgment is made that the data being downloaded have not been updated by the update judgment section, and issues a request to perform a download from the start of the data at a point in time, to the server, in cases where judgment is made that the data being downloaded have been updated.

With the above mobile communication terminal, if the download request section issues a request to download data, to the server, the data are downloaded from the server in accordance with the request and, therefore, the download reception section receives the data that have been downloaded and holds the latest update information relating to data that have already been received. A continuation of the download is impossible while the data are being received. Thereafter, when the recovery detection section detects recovery, the resumption request section issues a request to resume the download, to the server. In response to the request, attribute information (attribute information including the latest update information relating to the data at a point in time) come to be transmitted from the server on the basis of a predetermined procedure. When the attribute information reception section receives attribute information, the update judgment section judges whether the data being downloaded have been updated by comparing the latest update information included in the attribute information thus received and the latest update information relating to the data being downloaded that have already been received. Here, in cases where it is judged that the data being downloaded have not been updated, the download request section issues a request to download only the incomplete parts of the data being downloaded, to the server. However, in cases where it is judged that the data being downloaded have been updated, the download request section issues a request for a download from the start of the data at a point in time, to the server.

As a result, in cases where judgment is made that the data being downloaded have not been updated, a download of only the incomplete parts of the data being downloaded is executed and, in cases where judgment is made that the data being downloaded have been updated, a download from the start of the data at a point in time (the latest data) comes to be executed. Hence, irrespective of whether the download target data have been updated, data of the latest version can be downloaded automatically and in a reasonable manner.

The latest update information can be constituted by the latest update time information or version information, relating to the data at a point in time.

In order to achieve the above object, the download resumption control method according to the present invention is a download resumption control method for a case where recovery occurs after a continuous download has become impossible during download processing in which a mobile communication terminal receives data that have been downloaded from a server and holds latest update information relating to data that have already been received, the method comprising: a resumption request step in which the mobile communication terminal issues a request to resume a download, to the server; an attribute information transmission step in which the server transmits attribute information including the latest update information relating to the data at a point in time, to the mobile communication terminal in response to the request on the basis of a predetermined procedure; an update judgment step in which the mobile communication terminal receives the attribute information and judges whether the data being downloaded have been updated by comparing the latest update information included in the received attribute information and the latest update information relating to data being downloaded that have already been received; and a download request step in which the mobile communication terminal issues a request to download only incomplete parts of the data being downloaded, to the server, in cases where the data being downloaded has not been updated, and issues a request to perform a download from the start of the data at a point in time, to the server, in cases where the data being downloaded have been updated.

According to the download resumption control method, if the mobile communication terminal issues a request to resume the download, to the server in the resumption request step, the server transmits attribute information including the latest update information relating to the data at a point in time to the mobile communication terminal in response to the request on the basis of a predetermined procedure in the attribute information transmission step. Thereafter, in the update judgment step, the mobile communication terminal receives the attribute information and judges whether the data being downloaded have been updated by comparing the latest update information included in the received attribute information and the latest update information relating to the data being downloaded that have already been received. Here, in the download request step, the mobile communication terminal issues a request to download only incomplete parts of the data being downloaded, to the server, in cases where the data being downloaded have not been updated and issues a request to perform a download from the start of the data at a point in time, to the server, in cases where the data being downloaded have been updated.

As a result, in cases where it is judged that the data being downloaded have not been updated, a download of only incomplete parts of the data being downloaded is executed and, in cases where it is judged that the data being downloaded have been updated, a download from the start of the data at a point in time (the latest data) is executed. Hence, the latest version of the data can be downloaded automatically and in a reasonable manner irrespective of whether the download target data have been updated.

The present invention makes it possible to download the latest version of the data automatically and in a reasonable manner irrespective of whether the download target data have been updated.

### BRIEF DESCRIPTION OF THE DRAWINGS

Fig. 1 is a hardware constitutional view of the communication system of an embodiment of the invention.

Fig. 2 is a functional block constitutional view of a mobile communication terminal and a server.

Fig. 3 shows an example of an ADF.

Fig. 4 is a flowchart that shows a procedure of the download resumption control processing.

### DESCRIPTION OF THE PREFERRED EMBODIMENTS

An embodiment of the present invention will be described hereinbelow with reference to the drawings.

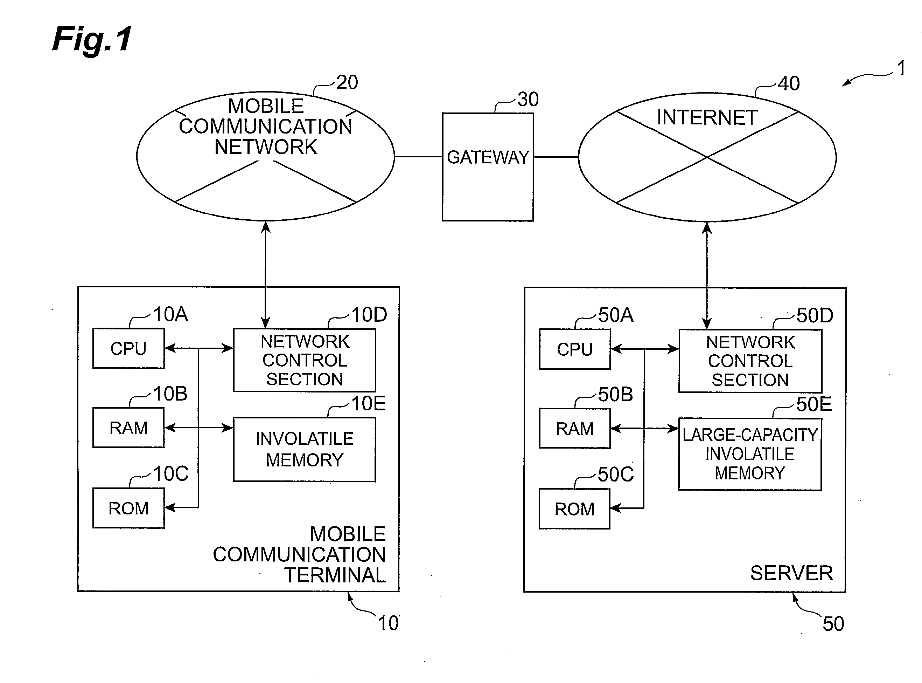

Fig. 1 is a hardware constitutional view of the communication system of this embodiment. As shown in Fig. 1, the communication system 1 is constituted comprising a mobile communication terminal 10 according to the present invention and a server (so-called WEB server) 50 that provides content via the Internet 40. The mobile communication terminal 10 is capable of communicating with the server 50 via a mobile communication network 20, gateway 30, and the Internet 40.

The mobile communication terminal 10 is constituted comprising a CPU 10A, a RAM 10B, a ROM 10C, a network control section 10D that performs communication processing with the outside, and an involatile memory 10E. Likewise, the server 50 is constituted comprising a CPU 50A, a RAM 50B, a ROM 50C, a network control section 50D that performs communication processing with the outside, and a large-capacity involatile memory 50E that holds a large-capacity storage area.

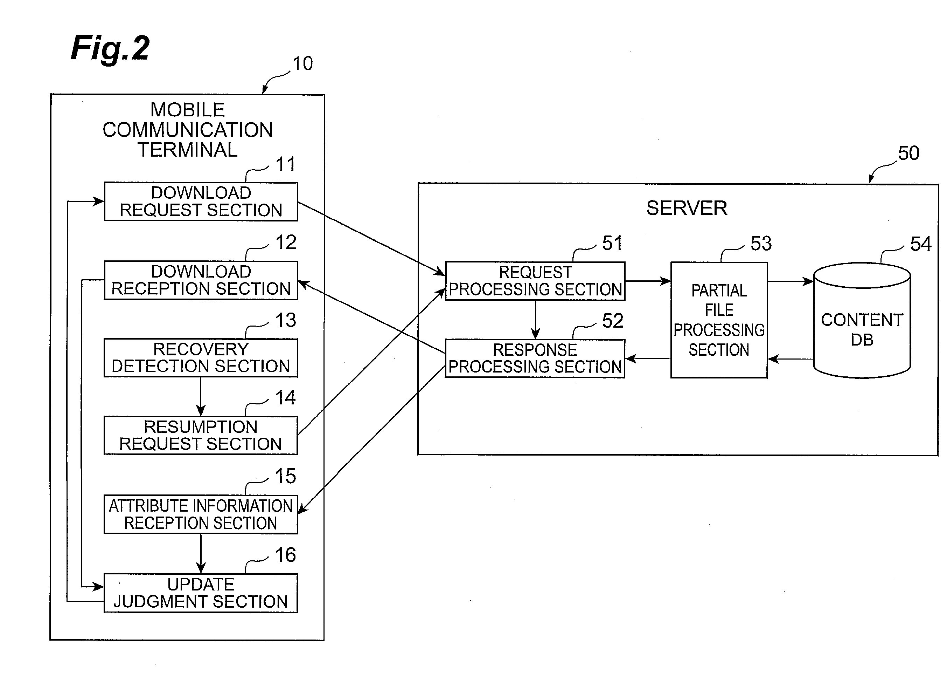

The mobile communication terminal 10 and server 50 that have the above hardware constitution have the functional block constitution shown in Fig. 2 from the perspective of a functional block constitution. As shown in Fig. 2, the mobile communication terminal 10 comprises, as a functional block constitution, a download request section 11, a download reception section 12, a recovery detection section 13, a resumption request section 14, an attribute information reception section 15, and an update judgment section 16.

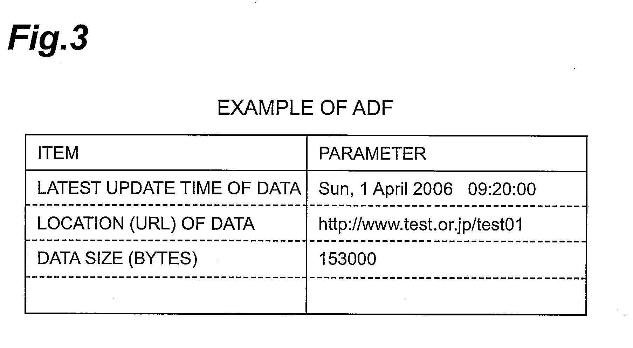

Of the above components, the download request section 11 has a function to issue a request to download data, to the server 50. The download reception section 12 has a function to receive data that have been downloaded from the server 50 in accordance with the request from the download request section 11. Further, the download reception section 12 also has a function to hold the latest update information relating to the data that have already been received (the latest update time information shown in Fig. 3, for example).

The recovery detection section 13 has a function to detect recovery after a continuous download has become impossible during a download. The resumption request section 14 has a function to issue a request to resume the download, to the server 50, in cases where recovery after a continuous data download has been impossible is detected. The attribute information reception section 15 has a function to receive attribute information including the latest update information relating to data at that point in time (also called an 'Application Descriptor File', referred to hereinbelow as an 'ADF') that has been transmitted by the server 50 on the basis of a predetermined procedure. The update judgment section 16 has a function to obtain the latest update information relating to the data being downloaded that have already been received from the download reception section 12 and judge whether the data being downloaded have been updated by comparing the latest update information relating to the data being downloaded and the latest update information included in the ADF.

In addition, the download request section 11 is constituted to issue a request to download only incomplete parts of the data being downloaded ('continuous data' hereinbelow), to the server 50, in cases where it is judged by the update judgment section 16 that the data being downloaded have not been updated, but the download request section 11 is constituted to issue a request to perform a download from the start of the data at that point in time, to the server 50, in cases where it is judged that the data being downloaded have been updated. Further, the continuous data download request includes information representing the range of the continuous data in the whole data or information representing the start address of the continuous data, and the server 50 that receives the continuous data download request is able to specify the range of the continuous data to be transmitted.

As shown in Fig. 3, the ADF can be constituted comprising information such as the latest update time for the data, and the location (URL) and size of the data, for example. Although Fig. 3 shows an example in which the latest update time information relating to the data at that time is adopted as the latest update information included in the ADF, the latest update information is not limited to the latest update time information, and data version information may also be adopted.

Meanwhile, the server 50 is constituted comprising a request processing section 51, a response processing section 52, a partial file processing section 53, and a content database 54. Of the above components, the request processing section 51 has a function to receive a download request or download resumption request or the like from the mobile communication terminal 10 and transmit the required content to the partial file processing section 53. The content database 54 has a function to hold a variety of content data. The partial file processing section 53 has a function to specify the range of the continuous data on the basis of information representing the range of the continuous data included in the request or information representing the continuous data start address if the request from the mobile communication terminal 10 is a continuous data download request, acquire the continuous data from the content database 54, and transmit the continuous data to the mobile communication terminal 10 via the response processing section 52. The partial file processing section 53 also has a function to acquire the whole of the data from the content database 54 and to perform a transmission from the start of the data to the mobile communication terminal 10 via the response processing section 52, if the request from the mobile communication terminal 10 is a request to perform a download from the start of the data.

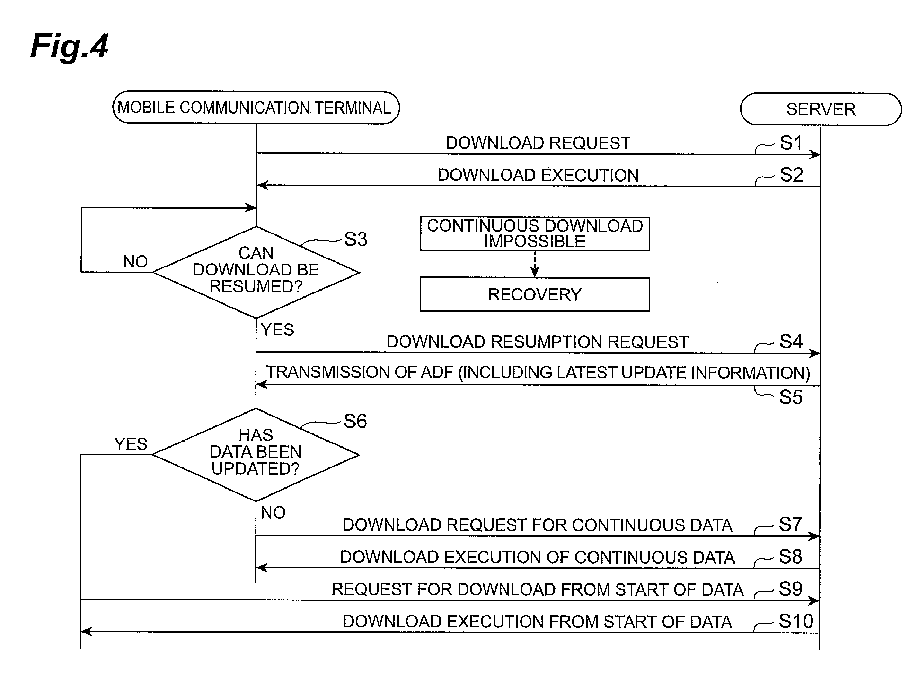

The download resumption control processing will be described next using Fig. 4. As shown in Fig. 4, the download request section 11 of the mobile communication terminal 10 first issues a request to download data, to the server 50 (S1 in Fig. 4), whereupon the partial file processing section 53 of the server 50 acquires all of the data from the content database 54 and transmits the data to the mobile communication terminal 10 via the response processing section 52 (S2: execution of download). Upon receipt of the data that have been downloaded from the server 50, the download reception section 12 of the mobile communication terminal 10 then holds the latest update information (the latest update time information in Fig. 3, for example) relating to the data being downloaded that have already been received.

Thereafter, in cases where a continuous download has become impossible due to factors such as the user of the mobile communication terminal 10 moving out of range, the recovery detection section 13 of the mobile communication terminal 10 judges whether the communication state has been recovered and the download can be resumed (due to factors such as the user of the mobile communication terminal 10 moving back within range or the like) (S3). If the user of the mobile communication terminal 10 detects recovery of the communication state due to factors such as the user of the mobile communication terminal 10 moving back within range or the like and detects that the download can be resumed (when Yes at S3), the resumption request section 14 issues a request to resume the download, to the server 50 (S4). In response to the download resumption request, an ADF such as that shown in Fig. 3 that relates to the data at that point in time is transmitted from the server 50 on the basis of a predetermined procedure (S5).

When the attribute information reception section 15 in the mobile communication terminal 10 receives the ADF, the update judgment section 16 obtains the latest update time information relating to the data being downloaded that have already been received from the download reception section 12 and judges whether the data being downloaded have been updated by comparing the latest update time information relating to the data being downloaded and the latest update time information of the data included in the ADF (S6).

If it is judged in S6 that the data being downloaded have not been updated, the download request section 11 transmits a continuous data download request including, for example, information representing the range of the continuous data in the whole data or information representing the continuous data start address, to the server 50. The partial file processing section 53 of the server 50 that has received the request specifies the range of the continuous data on the basis of the information representing the range of the continuous data included in the request or information representing the continuous data start address or the like, acquires the continuous data from the content database 54 and transmits continuous data to the mobile communication terminal 10 via the response processing section 52 (S8: download execution of continuous data).

However, if it is judged in S6 that the data being downloaded has been updated, the download request section 11 transmits a request for a download from the start of the data at that point in time, to the server 50 (S9). The partial file processing section 53 of the server 50 that receives the request acquires all of the data from the content database 54 and performs a transmission from the start of the data to the mobile communication terminal 10 via the response processing section 52 (S10: download execution from the start of the data).

According to the embodiment described hereinabove, in cases where it is judged that the data being downloaded have not been updated, a download of only the continuous data is executed and, in cases where it is judged that the data being downloaded has been updated, a download from the start of the data at that point in time (the latest data) is executed. Therefore, the latest version of the data can be downloaded automatically and in a reasonable manner irrespective of whether the download target data have been updated.

Further, the processing of Fig. 4 may also be executed by targeting only data with a size that lies within a predetermined range. For example, the processing target may also be limited by targeting data which are more than 100 kilobytes and no more than one megabyte.

## Claims

1. A mobile communication terminal, comprising:
a download request section that issues a request to download data, to a server;
a download reception section that receives data that have been downloaded from the server in accordance with the request from the download request section and holds latest update information relating to the data already received;
a recovery detection section that detects recovery from inability to continuously download during reception by the download reception section;
a resumption request section that issues a request to resume the download, to the server, in cases where recovery from inability to continuously download is detected by the recovery detection section;
an attribute information reception section that receives attribute information including the latest update information relating to the data at a point in time, that has been transmitted from the server on the basis of a predetermined procedure in response to the request from the resumption request section; and
an update judgment section that judges whether the data being downloaded has been updated by comparing the latest update information included in the attribute information received by the attribute information reception section and the latest update information relating to data being downloaded that has already been received, wherein
the download request section issues a request to download only incomplete parts of the data being downloaded, to the server, in cases where judgment is made that the data being downloaded have not been updated by the update judgment section, and issues a request to perform a download from the start of the data at a point in time, to the server, in cases where judgment is made that the data being downloaded have been updated.

2. The mobile communication terminal according to claim 1, wherein the latest update information is constituted by the latest update time information or version information, relating to the data at a point in time.

3. A download resumption control method for a case where recovery occurs after a continuous download has become impossible during download processing in which a mobile communication terminal receives data that have been downloaded from a server and holds latest update information relating to data that have already been received, the method comprising:
a resumption request step in which the mobile communication terminal issues a request to resume a download, to the server;
an attribute information transmission step in which the server transmits attribute information including the latest update information relating to the data at a point in time, to the mobile communication terminal in response to the request on the basis of a predetermined procedure;
an update judgment step in which the mobile communication terminal receives the attribute information and judges whether the data being downloaded have been updated by comparing the latest update information included in the received attribute information and the latest update information relating to data being downloaded that have already been received; and
a download request step in which the mobile communication terminal issues a request to download only incomplete parts of the data being downloaded, to the server, in cases where the data being downloaded has not been updated, and issues a request to perform a download from the start of the data at a point in time, to the server, in cases where the data being downloaded have been updated.
